# EUROPEAN PATENT SPECIFICATION

(11) **EP 2 352 620 B1**
(45) Date of publication and mention of the grant of the patent: **13.02.2013**
(21) Application number: 09825047.5
(22) Date of filing: 03.11.2009
(51) Int. Cl.: B23Q 5/32, B23B 47/00, B23Q 5/54, B23Q 17/09

(54) **DRILL SPINDLE UNIT**
BOHRSPINDELEINHEIT
UNITÉ DE BROCHE

(30) Priority: 05.11.2008 SE 0802347
(43) Date of publication of application: 10.08.2011
(73) Proprietor: Atlas Copco Industrial Technique AB, 105 23 Stockholm (SE)
(72) Inventor: ERIKSSON, Ulf, Michael, S-186 94 Vallentuna (SE); JACOBSSON, Wilhelm Mattias, SE-142 61 Trångsund (SE)
(86) International application number: PCT/SE2009/000483
(87) International publication number: WO 2010/053419

(56) References cited:
- GB-A- 1 283 730
- US-A- 4 453 868
- US-A- 4 591 299
- DATABASE WPI Week 197606, Derwent Publications Ltd., London, GB; AN 1976-B2723X, XP003026402 & SU 466 068 A2 (CORR MOTOR INST) 18 August 1975

## Description

The invention relates to a drill spindle unit of the type having a drill spindle with axially extending keyways for cooperation with a rotation drive mechanism, and a screw thread for cooperation with a feed drive mechanism, and bearings for radial and axial support of the drill spindle.

A drilling apparatus comprising a drill spindle unit of the above type is previously described in for instance US Patent No. 4,591,299. This apparatus includes a single pneumatic motor drivingly coupled to both the rotation drive mechanism and the feed drive mechanism.

In some prior art drill spindle units of the above type the rotation drive mechanism and the feed drive mechanism are driven by a common electric motor, and the feed force applied on the drill spindle has been controlled via the motor current such that when the motor current rises above a certain level the feed force is too high, and oppositely when the motor power is below a certain level the feed force is too low. So, it has been assumed that there is a safe enough connection between output power or torque of the rotation motor and the axial feed force applied on the drill spindle, and therefore, the motor power output has been monitored and controlled not to exceed certain limits set up for each drill size. This known technique means that the actual feed force applied on the drill spindle has not been measured directly. A serious drawback with this known technique is that there are a number other factors involved that may change the relationship between the motor power output and the feed force actually applied on the drill spindle. For instance damaged bearings and/or gears in the power transmission between the drive motor and the drill spindle would result in a misleading high motor power output and a accordingly an indicated "high" feed force with an erroneous and undesireable motor power reduction as a result.

Another way of indicating the feed force actually applied on the drill spindle is to arrange a couple of axial force sensing devices associated with the ball type spindle bearings of the drill spindle feed mechanism. This means that the axial force on the drill spindle is spread out to two or more bearings and that two or more axial force sensing devices are arranged to deliver separate signals to a calculating unit, wherein the received signals are put together to give a true indication of the actual feed force. Employing two or more axial force transferring bearings and two or more axial force sensing devices requires an extra calculating capacity for signal treatment, and it causes an unnecessary bulky drill spindle unit.

It is an object of the invention to provide a drill spindle unit of the type having a drill spindle with axially extending keyways for cooperation with a rotation drive mechanism and a screw thread for coooperation with a feed drive mechanism, wherein a feed force sensing device is provided which enables slimmer outer dimensions of the spindle unit and which generates a single feed force responsive signal which is not influenced by irregularities in the power transmission of the spindle unit and which gives a direct and true measurement of the axial feed force actually applied on the drill spindle.

Further objects and advantages of the invention will appear from the following specification and claims.

A preferred embodiment of the invention is described in detail below with reference to the accompanying drawing.

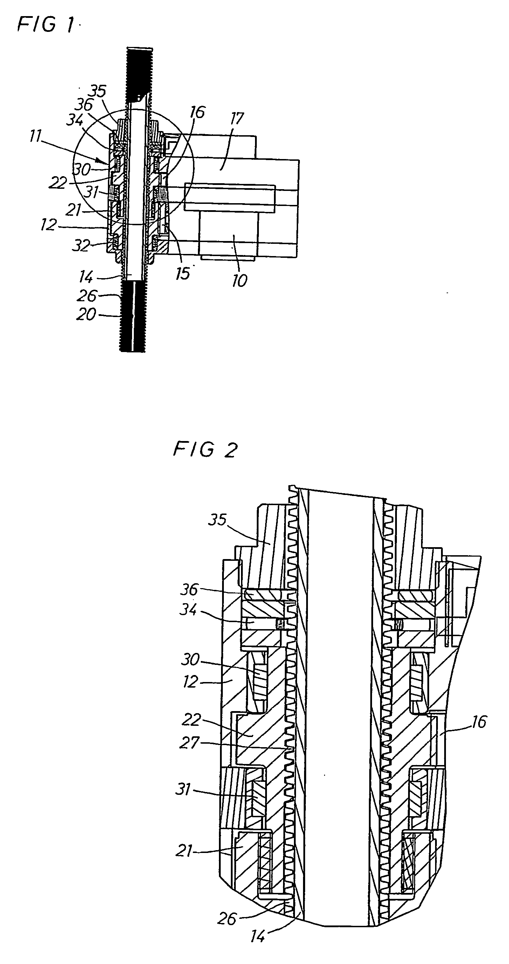

In the drawing
Fig. 1 shows a side view of a drilling apparatus including a drill spindle according to the invention.
Fig. 2 shows, on a larger scale, a fractional view of the drilling apparatus in Fig. 1.

The drilling apparatus illustrated in the drawings comprises a rotation motor 10, a drill spindle unit 11 including a housing 12 and a tubular drill spindle 14, a drill spindle rotation drive mechanism 15, a drill spindle feed drive mechanism 16, and a power transmission 17 connecting the motor 10 to both of the rotation drive mechanism 15 and the feed drive mechanism 16. The rotation drive mechanism 15 includes a rotation drive sleeve 21 surrounding the drill spindle 14 and is axially locked to the housing 12. The feed drive mechanism 16 comprises a rotating feed drive sleeve 22 also surrounding the drill spindle 14 and being axially locked to the housing 12.

The rotation drive sleeve 21 is provided with internal projections (not shown), and drill spindle 14 is provided with a couple of axially extending keyways 20, wherein the projections are intended to cooperate with the keyways 20 for transferring a rotation drive torque to the drill spindle 14 while permitting axial movement of the latter. Moreover, the drill spindle 14 is provided with an external screw thread 26 for cooperation with an internal thread 27 of the feed drive sleeve 22 so as to exert axial forces onto the drill spindle 14 when rotated.

This type drill spindle rotation drive and feed drive arrangement is well known and previously described in the above mentioned US Patent No. 4,591,299 as well as in US Patent No. 5,351,797. Therefore this spindle drive arrangement is not described in further detail.

The feed drive sleeve 22 and the rotation drive sleeve 21 are radially supported relative to the housing 12 via needle type bearings 30,31,32 which are not able to transfer any axial forces between the sleeves 22,21 and the housing 12. Instead, the feed drive sleeve 22 is axially supported relative to the housing 12 by a thrust bearing 34 which is located between the rear end of the feed drive sleeve 22 and a rear end wall 35 of the housing 12. Between the thrust bearing 34 and this end wall 35 there is provided an axial force sensing device in the form of a load cell 36 which is arranged to deliver electric signals in response to the axial forces applied on the drill spindle 14 via the feed drive sleeve 22. These signals are received and treated by a non-illustrated drill operation monitoring and controlling unit connected to the drive motor 10.

In this embodiment of the invention the bearings 30,31,32 are of the needle type which is a suitable type of bearings. Alternatively, there could be used other types of roller bearings or even plain bearings. The important thing is that they do not transfer any axial load from the housing 12 to the drill spindle 14.

A significant advantage gained by the bearing arrangement and axial force indication device according to the invention is that there is obtained a true indication of the axial force actually applied on the drill spindle 14 without any influence of occurring malfunctions of the power transmission between the motor and the feed drive mechanism 16.

The radial needle bearing support of the feed drive sleeve 22 is advantageous also in that the entire axial load on the drill spindle 14 is transferred to the housing 12 via a single thrust bearing 34 and that a single axial load sensing device could be used. This simplifies the signal treatment in the drill operation monitoring and controlling unit.

Still another advantage gained by the invention is that it enables a slim outer dimension of the drill spindle unit 11 because the needle bearing arrangement is very compact. A slimmer drill unit provides for an improved accessibility of the drill unit at different applications.

It is to be noted that the embodiments of the invention are not limited to the described example but can be freely varied within the scope of the claims. For instance the axial force sensing load cell 36 may be of any suitable type. One such type is a piezo electric element.

## Claims

1. Drill spindle unit, comprising a housing (12), a drill spindle (14) rotatable and longitudinally displaceable relative to the housing (12) and connected to a drive motor (10), wherein the drill spindle (14) is provided with axially extending keyways (20) for cooperation with internal projections of a drill spindle (14) surrounding rotation drive sleeve (21), and a screw thread (26) for cooperation with an internal thread (27) of a drill spindle (14) surrounding feed drive sleeve (22), and bearings (30-32,34) for radial and axial support of the drill spindle (14) relative to the housing (12),
**characterized in that** said bearings (30-32,34) comprise
• one or more radial bearings (30-32) for transferring radial forces only between the housing (12) and the feed drive sleeve (22),
• a single thrust bearing (34) for transferring axial forces only between the housing (12) and the feed drive sleeve (22), wherein
• an axial force sensing device (36) is associated with said thrust bearing (34) and arranged to deliver axial force responsive electric signals.

2. Drill spindle unit according to claim 1, wherein said radial bearings (30-32), said thrust bearing (34), and said axial force sensing device (36) are arranged between the feed drive sleeve (22) and the housing (12).

3. Drill unit according to claim 1 or 2, wherein said radial bearings (30-32) comprise needle bearings.

4. Drill unit according to anyone of claims 1-3, wherein the drive motor (10) is a pneumatic motor.

## Patentansprüche

1. Bohrspindeleinheit, umfassend ein Gehäuse (12), eine Bohrspindel (14), die bezogen auf das Gehäuse (12) drehbar und längsverschiebbar ist und mit einem Antriebsmotor (10) verbunden ist, wobei die Bohrspindel (14) mit axial verlaufenden Keilnuten (20) zum Zusammenwirken mit inneren Vorsprüngen einer die Bohrspindel (14) umgebenden Rotationsantriebshülse (21) versehen ist, und ein Außengewinde (26) zum Zusammenwirken mit einem Innengewinde (27) einer die Bohrspindel (14) umgebenden Vorschubantriebshülse (22) und Lager (30 bis 32, 34) für den radialen und axialen Halt der Bohrspindel (14) bezogen auf das Gehäuse (12),
**dadurch gekennzeichnet, dass** die Lager (30 bis 32, 34) Folgendes umfassen
- ein oder mehrere Radiallager (30 bis 32) zum Übertragen von Radialkräften nur zwischen dem Gehäuse (12) und der Vorschubantriebshülse (22),
- ein einzelnes Axiallager (34) zum Übertragen von Axialkräften nur zwischen dem Gehäuse (12) und der Vorschubantriebshülse (22), wobei
- eine Axialkrafterfassungseinrichtung (36) dem Axiallager (34) zugehörig und angeordnet ist, auf Axialkräfte ansprechende elektrische Signale abzugeben.

2. Bohrspindeleinheit nach Anspruch 1, wobei die Radiallager (30 bis 32), das Axiallager (34) und die Axialkrafterfassungseinrichtung (36) zwischen der Vorschubantriebshülse (22) und dem Gehäuse (12) angeordnet sind.

3. Bohreinheit nach Anspruch 1 oder 2, wobei die Radiallager (30 bis 32) Nadellager umfassen.

4. Bohreinheit nach einem der Ansprüche 1 bis 3, wobei der Antriebsmotor (10) ein Pneumatikmotor ist.

## Revendications

1. Unité de broche, comprenant un boîtier (12), une broche (14) rotative et pouvant être déplacée longitudinalement par rapport au boîtier (12) et connectée à un moteur d'entraînement (10), dans laquelle la broche (14) est prévue avec des rainures de clavette (20) s'étendant axialement pour une coopération avec des saillies intérieures d'une douille d'entraînement en rotation (21) entourant la broche (14), et un filetage cylindrique (26) pour une coopération avec un filetage intérieur (27) d'une douille d'entraînement de l'avance (22) entourant la broche (14), et des paliers (30-32, 34) pour le support radial et axial de la broche (14) par rapport au boîtier (12),
**caractérisée en ce que** lesdits paliers (30-32, 34) comprennent
• un ou plusieurs paliers radiaux (30-32) pour transférer des forces radiales uniquement entre le boîtier (12) et la douille d'entraînement de l'avance (22),
• un palier de butée (34) unique pour transférer des forces axiales uniquement entre le boîtier (12) et la douille d'entraînement de l'avance (22), dans laquelle
• un dispositif de détection de force axiale (36) est associé audit palier de butée (34) et disposé pour fournir des signaux électriques réagissant à la force axiale.

2. Unité de broche selon la revendication 1, dans laquelle lesdits paliers radiaux (30-32), ledit palier de butée (34), et ledit dispositif de détection de force axiale (36) sont disposés entre la douille d'entraînement de l'avance (22) et le boîtier (12).

3. Unité de forage selon la revendication 1 ou 2, dans laquelle lesdits paliers radiaux (30-32) comprennent des roulements à aiguilles.

4. Unité de forage selon l'une quelconque des revendications 1 à 3, dans laquelle le moteur d'entraînement (10) est un moteur pneumatique.
